Europäisches Patentamt

European Patent Office

Office européen des brevets

(19)

(12)

(11) Publication number: 0 294 008
A2

# EUROPEAN PATENT APPLICATION

(21) Application number: 88201206.5

(22) Date of filing: 13.03.85

(51) Int. Cl.⁴: F16L 47/02 , B29C 47/02 , B29C 65/36 , //B29L31:24

(30) Priority: 14.03.84 NL 8400816

(43) Date of publication of application:
07.12.88 Bulletin 88/49

(60) Publication number of the earlier application in accordance with Art.76 EPC: 0 159 733

(84) Designated Contracting States:
AT BE CH DE FR GB IT LI LU NL SE

(71) Applicant: WAVIN B.V.
Händellaan 251
NL-8031 EM Zwolle(NL)

(72) Inventor: van Dongeren, Jan Peter
Kerkweg 6
NL-7691 AL Bergentheim(NL)
Inventor: Lodder, Bernard
Baalder Esch 29
NL-7772 JW Hardenberg(NL)
Inventor: Overeijnder, Hans
Mercuriuslaan 6
NL-7771 EH Hardenberg(NL)

(74) Representative: van der Veken, Johannes
Adriaan et al
EXTERPATENT B.V. P.O. Box 90649
NL-2509 LP 's-Gravenhage(NL)

(54) **An induction weldable socket and a process and apparatus for manufacturing such a socket and a process for connecting said socket to a penetrating pipe part.**

(57) An induction weldable socket 2 comprises an inductively heatable lining 3 near the inner wall of the socket, the socket 2 being manufactured by feeding an inductively heatable lining to a transverse extrusion head 22 of an extruder 21 and cutting the extruded pipe with lining 3 from the extruder to a socket 2. The inductively heatable lining 3 may be fed to the extrusion head 22 as a hose 37 assembled or woven from conducting wires or a tube 37 formed from a strip of gauze 34 or an assembly consisting of short-circuited 19a windings obtained by spirally winding a conducting wire 27.

An apparatus for manufacturing the socket comprises an extruder 21 with a transverse extrusion head 22 and an orifice 26 for supplying the inductively heatable lining 3 to the extrusion head 22.

The apparatus further comprises a calibrating head 23, a cooling device 24, a draw bench and a shortening device 33. In case of a tube 37 as lining the apparatus comprises tube forming means 29; 35, 36 for forming a tube from a strip of gauze of conducting material.

In case of a woven hose 37 as lining the apparatus comprises weaving means 38, 39 for weaving a hose 37. In case of a lining consisting of short circuited windings of a spirally wound conducting wire, the apparatus comprises means 27a, 29a for forming a spirally wound conducting wire and means 18, 20 for short circuiting windings of the spirally wound wire by another conducting wire 19.

A socket 2 is connected with a penetrating pipe end 1a, 1b by heating the inductively heatable lining 3; 37; 19, 27 by means of an induction coil 10.

FIG. 1.

# An induction weldable socket and a process and apparatus for manufacturing such a socket and a process for connecting said socket to a penetrating pipe part.

This application is a divisional application divided out from European Patent Application No. 85200370.6

The invention relates to a weldable socket of thermoplastic material being provided internally, at least locally, with a lining of electrically conductive material near the inner wall of the socket. A socket as used herein means of course any pipe fitting which may be used for connecting such a pipe fitting with a pipe end by electroheat welding.

Two plastic pipes are frequently connected by sealingly placing a socket over the two pipe ends approaching each other and to fuse together the outer wall part of the pipe and the inner wall part of the socket by connecting an electrically conductive lining in the inner wall of the socket to an electrical source. In order to connect the lining to an electrical circuit these sockets have to be provided with connecting means. e.g. pulled-off ends of wires of electrically conductive material or other connecting means have to be attached to the lining, for example screws, nails or pins which come into contact with the lining of electrically conductive material and project outwards from the wall of the socket or fitting. These connecting means can be conveniently attached by shooting pins into the wall of the socket or fitting.

It will be obvious that these connecting means may be easily damaged and/or corroded, whilst on the other hand the provision of such connecting means complicates the production of such sockets.

Moreover, heating of the linings is also complicated as the ends of the electrical source have to be connected and disconnected with each socket.

It is now the aim of the invention to provide a weldable socket of the aforementioned type without the inconvenient connecting means, and which sockets may be used without connecting and disconnecting an electrical source with the connecting means of a socket and permitting a simple production of the socket.

This aim is attained in that the socket is provided with an inductively heatable lining.

By using an inductively heatable lining the lining can be heated by simply accommodating an induction coil around the socket without forming any inconvenient connection with the socket.

In a preferred embodiment the inductively heatable lining comprises a tube or hose of electrically conductive gauze and/or woven material.

This socket may be easily produced.

Advantageously the inductively heatable lining comprises a spiral of short circuited windings. In this manner the normal production of sockets of this type has only to be modified in a slight manner.

These sockets may be manufactured by an injection moulding process, but then they are relatively expensive while the manufacturing time is relatively long.

Therefore another object of the invention is to provide a process of manufacturing a weldable socket of this type which can be manufactured continuously and in a very simple manner.

According to the invention this object is achieved by means of a process of manufacturing a weldable socket of thermoplastic material by providing said socket internally, at least locally, with a lining of electrically conductive material near the inner wall of the socket according to the invention, being characterized in that an inductively heatable lining is passed in an extrusion head of an extruder for thermoplastics, said lining being embedded in the extruded material and which is drawn, together with the extruded material in the form of a pipe from the extrusion die, is cooled and thereafter cut to the desired socket length.

This permits a continuous production by means of a simple extrusion process.

Preferably the lining should be continuous from one side to the other side of the socket, which is possible by moulding the socket in such a way that a strip of gauze of electrically conductive material is formed to give a tube in front of the extrusion head, which tube is introduced into the extrusion head. Advantageously the electrically conductive material may be introduced into the extrusion head in the form of a hose assembled or woven from one or more wires.

The invention also relates to an apparatus for manufacturing a weldable socket according to the process of the invention, comprising means for providing said socket internally with a lining of electrically conductive material near the inner wall of the socket, which is characterized in that the apparatus comprises at least an extruder having at least a transverse extrusion head, said transverse extrusion head being provided with an inlet for electrically conductive material comprising at least one orifice for the passage of an inductively heatable lining of electrically conductive material.

At last the invention relates to a process for connecting at least one penetrating pipe part of thermoplastic material to a weldable socket of thermoplastic material comprising a lining of electrically conductive material near the inner wall of the socket, said lining being heated for obtaining said connection, being characterized in that the lining is an inductively heatable lining being heated by induction means.

The socket may consist of any thermoplastic material but polyolefins such as polyethylene or polypropylene are preferred.

The invention will now be illustrated by means of an embodiment of the invention as shown in the drawing, wherein:

- Fig. 1 is an axial cross-section through an induction weldable socket according to the invention connecting two pipe ends;

- Fig. 2 is a perspective view of an alternating current coil accommodated around a socket of the invention connecting two pipe ends;

- Fig. 3 is a diagrammatic view of an extrusion installation having a feed device for feeding a lining of electrically conductive material, which is formed from a strip of gauze, to the extrusion head;

- Fig. 4 is a perspective view of a feed device for a lining of electrically conductive material in the form of a woven hose; and

- Fig. 5 is a perspective view of a transverse extrusion head comprising a feed device and, around the latter, bushes with a lining of electrically conductive material for forming a lining of short circuited windings.

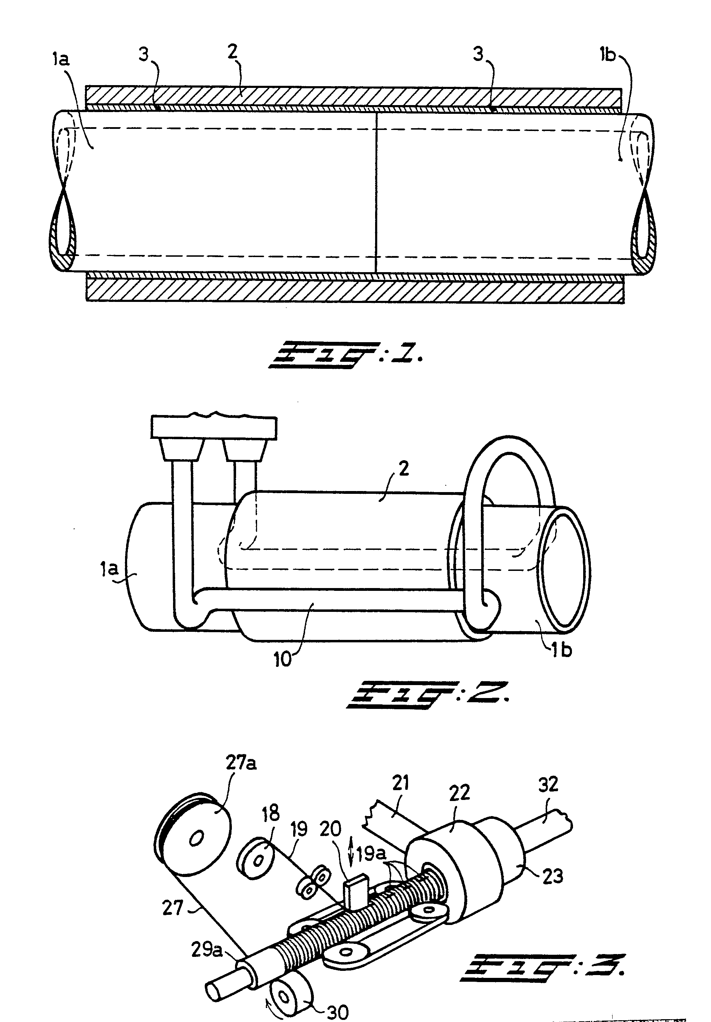

In figure 1, to illustrate the invention, an induction weldable socket 2 of thermoplastic material, such as polyethylene, is placed around two pipe ends 1a and 1b. The socket is provided with an inductively heatable lining 3.

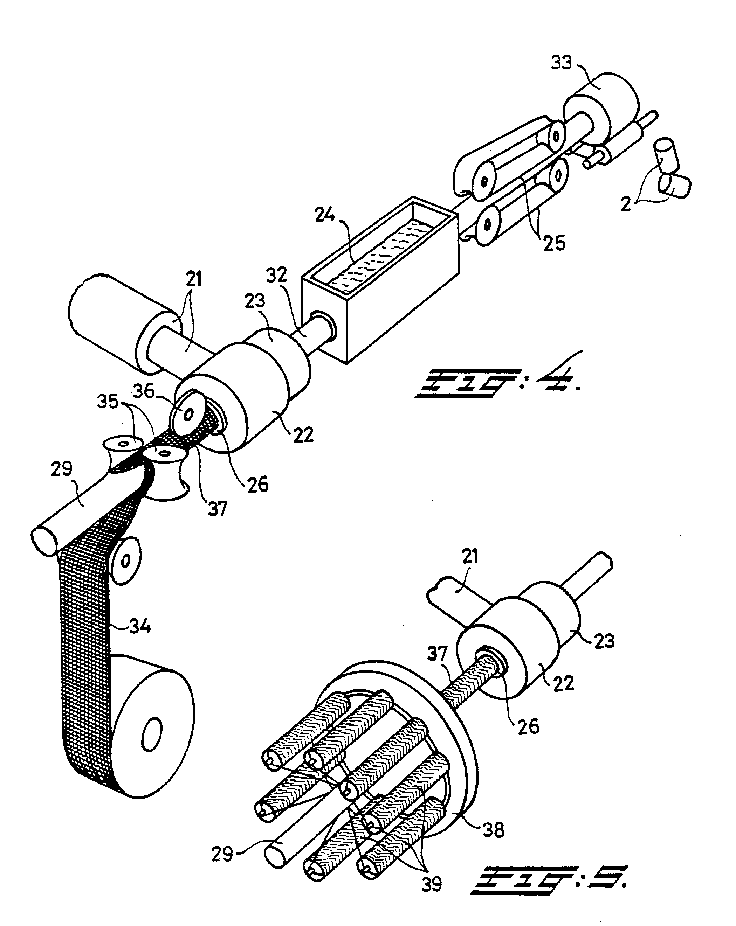

This socket 2 is manufactured by a continuous process by introducing a tube of gauze of electrically conductive material into an extrusion head of an extruder for thermoplastics in order to form this lining embedded in the extruded material of the socket 2, by drawing the lining, together with the extruded material, in the form of a pipe from the extrusion die (vide fig. 3) cooling same and subsequently shortening it to the desired socket length, which will be described in more detail later on.

The two pipe ends penetrating in the socket 2 are heatsealed to the socket by induction heating. This heating is effected by placing an induction coil 10 around the connecting socket 2.

The manufacture of sockets by means of the method according to the invention can be carried out continuously by using an apparatus as shown in fig. 5. This apparatus comprises an extruder 21 having a transverse extrusion head 22, a calibrating head 23, a cooling device 24 in the form of a cooling bath and a draw bench which is generally indicated by reference numeral 25.

The transverse extrusion head 22 possesses an inlet or passage orifice 26 for the electrically conductive material. The inlet 26 is formed as an annular orifice for the passage of a tube 37 or hose of electrically conductive material. The electrically conductive material in the form of a tube or hose embedded in a pipe 32 of extruded thermoplastic material, then arrives in the cooling bath 24, is kept under constant tension by the draw bench 25 and is transported further to a shortening device 33. These shortening devices are generally known and consist of a saw or milling device which is displaced, during its operative period, at the rate of the extruded pipe, for example by means of a carriage on a guide. The movement cycle of the shortening device 33 is such that the pipe is formed into sockets 2 of determined length since the cycle of the shortening device 33 is entirely adapted to the extrusion speed or discharge speed. A stationary core 29 is employed before the extrusion head 22 near the passage orifice 26 and the electrically conductive material is fed to this core in the form of strip of gauze 34. A gauze tube is formed and fed into passage orifice 26 by means of driven pressure rollers 35 and 36 respectively. It is also possible to fed into orifice 26 a hose 37 being woven from conductive wire around the stationary core 29 by means of a spool mounted on a weaving plate 38 (vide fig. 4).

A socket or pipe fitting 2 manufactured according to the invention is thus provided with a hoselike lining 37 of electrically conductive material near the inner wall of the socket or fitting 2.

As the peripheral lining 37 is adapted to be placed in a field of alternating current for inductively heating this lining, the lining has not to be connected with connecting means for connecting the lining of electrically conductive material to an electrical source. This simplifies the manufacture of the socket.

In another advantageous embodiment of the invention the lining may also consist of an assembly of short circuited windings as shown in figure 3. The wire 27 arriving from the reel 27a is wound up to form a spiral, via the draw-off roll 30 and the rotating winding core 29a and is fed over a stationary core to the extrusion head 22. During this transport the windings or groups of windings are each electrically short-circuited before the lining is surrounded by plastic. To this end a wire 19 arriving from a reel 18 and consisting of a readily meltable and electrically conductive material, for example soldering tin, is placed via a bolt 20, on the windings at the required positions, as is indicated by reference numeral 19a.

Such a lining whether it is continuous or not, can also be employed for the inductive heating of the socket.

When a wire 27 has been provided with a protecting plastic sheath the windings can be electrically short-circuited after or during a local removal of the sheath of thermoplastic material. This can be effected by melting or cutting. Though any thermoplastic material may be used for forming the socket polyolefins such as polyethylene and polypropylene, are preferred.

**Claims**

1. A weldable socket (2) of thermoplastic material being provided internally, at least locally, with a lining of electrically conductive material near the inner wall of the socket, characterized in that the socket (2) is provided with an inductively heatable lining (3; 37; 19, 27).

2. A weldable socket (2) according to claim 1, characterized in that the inductively heatable lining comprises a tube or hose (37) of electrically conductive gauze and/or woven material.

3. A weldable socket according to claim 1, characterized in that the inductively heatable lining comprises a spiral of short circuited windings (19, 27).

4. A process of manufacturing a weldable socket (2) of thermoplastic material by providing said socket internally, at least locally with a lining of electrically conductive material near the inner wall of the socket, according to claims 1 to 3, characterized in that an inductively heatable lining (3; 37;19, 27) is passed in an extrusion head (22) of an extruder (21) for thermo-plastics, said lining (3; 37;19, 27) being embedded in the extruded material and which is drawn, together with the extruded material in the form of a pipe from the extrusion die, is cooled and thereafter cut to the desired socket length (2).

5. A process according to claim 4, characterized in that the inductively heatable lining comprises a hose or tube (37) of an electrically conductive gauze and/or woven material, said tube (37) being preferably formed from a strip of electrically conductive gauze or woven material and said hose being preferably woven from electrically conductive wire material.

6. A process according to claim 4, characterized in that windings of a spiral are short-circuited to a inductively heatable lining, preferably said short circuited windings being formed by shaping a wire (27) of electrically conductive material to a spiral and interconnecting windings of said spiral by means of another wire (19) of electrically conductive material.

7. A process according to anyone of claims 4 to 6, characterized in that the lining is embedded in thermoplastic material by means of a transverse extrusion head (22).

8. An apparatus for continuously manufacturing a weldable socket (2) according to anyone of the preceding claims 1 to 3 comprising means for providing said socket internally with a lining (3; 37; 19, 27) of electrically conductive material near the inner wall of the socket, characterized in that the apparatus comprises at least an extruder (21) having at least a transverse extrusion head (22), said transverse extrusion head (22) being provided, with an inlet for electrically conductive material comprising at least one orifice for the passage of an inductively heatable lining (3, 37; 19, 27)of electrically conductive material.

9. Apparatus according to claim 8, characterized in that the apparatus comprises furthermore a calibrating head (23), a cooling device (24), a draw bench (25) and a shortening device (33).

10. Apparatus according to claim 8 or 9, characterized in that for forming an inductively heatable lining the apparatus comprises tube forming means (29; 35, 36) for forming a tube (37) from a strip of gauze of electrically conductive material; or weaving means (38, 39) for weaving a hose of wire of electrically conductive material, or means (27a, 29a) for forming a spiral of windings from a first wire (27) of electrically conductive material and means (18, 20) for interconnecting windings of said spiral by means of another wire (19) of electrically conductive material.

11. A process of connecting at least one penetrating pipe part (1a, 1b) of thermoplastic material to a weldable socket (2) of thermoplastic material comprising a lining (37; 19, 27) of electrically conductive material near the inner wall of the socket, said lining being heated for obtaining said connection, characterized in that the lining is an inductively heatable lining (3; 37;19, 27) being heated by induction means (10).

FIG:1.

FIG:2.

FIG:3.

33

2

24

25

21

32

23

22

35 36

29

26

37

34

FIG. 4.

21

23

37

22

26

29

38

39

FIG. 5.